# EUROPEAN PATENT APPLICATION

(11) **EP 4 517 519 A1**
(43) Date of publication of application: **05.03.2025**
(21) Application number: 23795345.0
(22) Date of filing: 24.04.2023
(51) Int. Cl.: G06F 9/451

(54) **SPLIT-SCREEN RENDERING METHOD AND APPARATUS, DEVICE, AND STORAGE MEDIUM**

(30) Priority: 29.04.2022 CN 202210476193
(71) Applicant: Beijing Zitiao Network Technology Co., Ltd., Beijing 100190 (CN)
(72) Inventor: LIAO, Yunhao, Beijing 100028 (CN)
(74) Representative: Dentons UK and Middle East LLP
(86) International application number: PCT/CN2023/090339
(87) International publication number: WO 2023/207912

(57) **Abstract**

Embodiments of the present disclosure provide a split-screen rendering method and apparatus, a device, and a storage medium. The method comprises: acquiring images respectively corresponding to a plurality of split screens, and rendering the plurality of images into the corresponding split screens, respectively; determining a target split screen from among the plurality of split screens; determining display information of screen pixels in an enlargement process of the target split screen; and on the basis of the display information, enlarging and rendering the image in the target split screen.

## Description

The present application claims priority of Chinese Patent Application No. 202210476193.2 filed to the Patent Office of China on April 29, 2022, the disclosure of which is incorporated herein by reference in its entirety as part of the present application.

### TECHNICAL FIELD

Embodiments of the present disclosure relate to a field of image rendering technology, for example, relate to a split screen rendering method and apparatus, a device and a storage medium.

### BACKGROUND

With the continuous intelligence of mobile terminals, people use mobile terminals for various entertainment activities. Multi-split screen video play on a mobile terminal is a common application scenario. At present, after adopting multi-split screen display, the subsequent mode of processing split screen display is relatively monotonous.

### SUMMARY

The embodiments of the present disclosure provide a split screen rendering method and apparatus, a device and a storage medium, which may automatically zoom in and render one of the split screens, so as to improve user experience and fun.

In a first aspect, an embodiment of the present disclosure provides a split screen rendering method, which comprises:
acquiring a plurality of images respectively corresponding to a plurality of split screens, and respectively rendering the plurality of images to the plurality of corresponding split screens;
determining a target split screen from the plurality of split screens;
determining display information of a screen pixel point in a target split screen zoom-in process; and
zooming in and rendering the image in the target split screen, based on the display information.

In a second aspect, an embodiment of the present disclosure further provides a split screen rendering apparatus, which comprises:
an image rendering module, configured to acquire a plurality of images respectively corresponding to a plurality of split screens, and respectively render the plurality of images to the plurality of corresponding split screens;
a target split screen determining module, configured to determine a target split screen from the plurality of split screens;
a display information determining module, configured to determine display information of a screen pixel point in a target split screen zoom-in process; and
a zooming-in and rendering module, configured to zoom in and render an image in the target split screen, based on the display information.

In a third aspect, an embodiment of the present disclosure further provides an electronic device, which comprises:
at least one processor; and
a storage apparatus, configured to store at least one program,
the at least one program, when executed by the at least one processor, causes the at least one processor to implement the split screen rendering method according to the embodiment of the present disclosure.

In a third aspect, an embodiment of the present disclosure further provides a readable storage medium, which comprises: a computer program, and the computer program, when executed by a computer processor, is configured to execute the split screen rendering method according to the embodiment of the present disclosure.

### BRIEF DESCRIPTION OF DRAWINGS

FIG. 1 is a schematic flow chart of a split screen rendering method provided by an embodiment of the present disclosure;
FIG. 2a is an exemplary diagram of a split screen provided by an embodiment of the present disclosure;
FIG. 2b is an exemplary diagram of a split screen provided by an embodiment of the present disclosure;
FIG. 2c is an exemplary diagram of a split screen provided by an embodiment of the present disclosure;
FIG. 3 is an exemplary diagram of a first set function provided by an embodiment of the present disclosure;
FIG. 4 is an exemplary diagram of a zoomed-in split screen provided by an embodiment of the present disclosure;
FIG. 5 is a structural schematic diagram of a split screen rendering apparatus provided by an embodiment of the present disclosure; and
FIG. 6 is a structural schematic diagram of an electronic device provided by an embodiment of the present disclosure.

### DETAILED DESCRIPTION

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

Names of messages or information interacted between a plurality of apparatuses according to the implementations of the present disclosure are only used for illustrative purposes, and are not used to limit the scope of these messages or information.

It may be understood that before using the technical solutions disclosed in the embodiments of the present disclosure, a user should be informed of type, usage scope, usage scenarios, etc. of personal information involved in the present disclosure and authorization from the user should be acquired according to relevant laws and regulations in an appropriate manner.

For example, in response to receiving an active request of a user, prompt information is sent to the user to clearly prompt the user that the operation to be executed as requested by the user will require acquiring and using personal information of the user. Thus, according to the prompt information, the user may autonomously choose whether to provide personal information to software or hardware such as an electronic device, an application, a server, or a storage medium that executes the operation of the technical solution of the present disclosure.

As an optional but non-restrictive implementation, in response to receiving an active request of a user, prompt information may be sent to the user, for example, through a pop-up window, and the prompt information may be presented in text in the pop-up window. In addition, the pop-up window may also carry a selection control for the user to choose whether to "agree" or "disagree" to provide personal information to an electronic device.

It may be understood that the above-described processes of informing and acquiring user authorization are only illustrative and do not constitute a limitation on the implementation of the present disclosure; other modes that meet relevant laws and regulations may also be applied to the implementation of the present disclosure.

It may be understood that the data involved in the technical solution (including but not limited to the data, acquisition or use of data) should comply with requirements of corresponding laws, regulations and relevant stipulations.

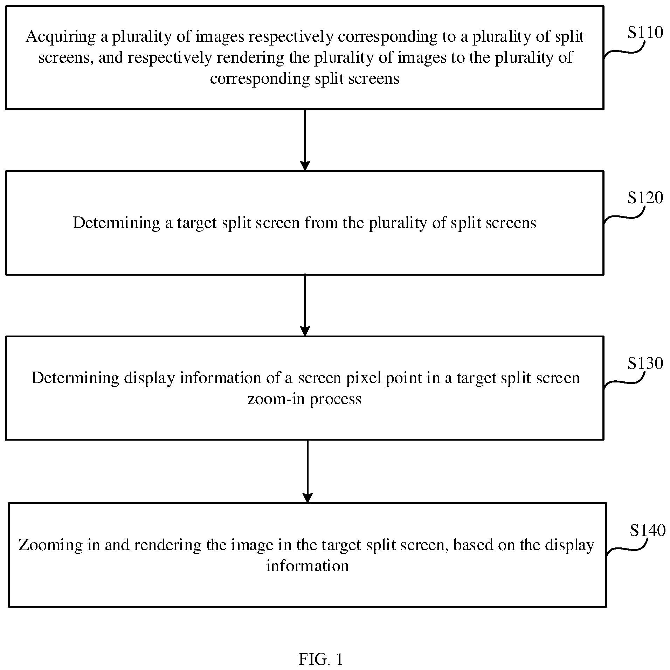

FIG. 1 is a schematic flow chart of a split screen rendering method provided by an embodiment of the present disclosure; the embodiment of the present disclosure is applicable to a case of zooming in and rendering an image in one of split screens; the method may be executed by a split screen rendering apparatus; the apparatus may be implemented in at least one form of software and hardware, or optionally, may be implemented through an electronic device; and the electronic device may be a mobile terminal, a personal computer (PC) end, or a server.

As shown in FIG. 1, the method includes:

S110: acquiring images respectively corresponding to a plurality of split screens, and respectively rendering the plurality of images to corresponding split screens.

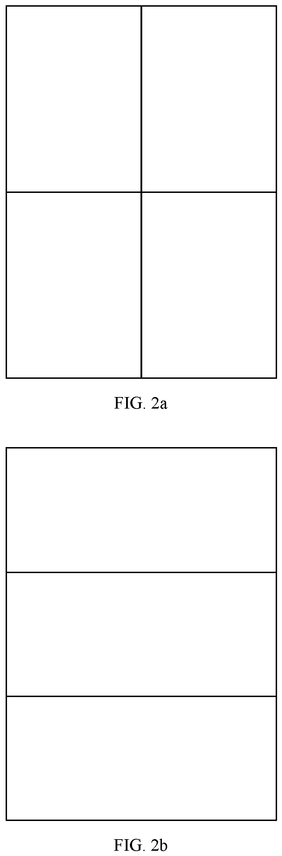

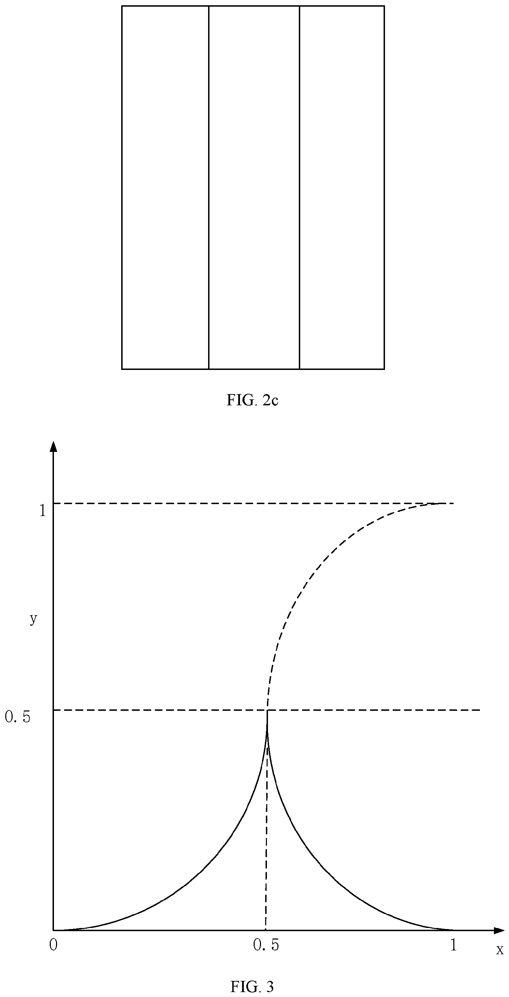

Wherein, the plurality of split screens may be understood as two or more split screens obtained by splitting a current screen interface. The screen splitting mode includes a direction for screen splitting, a proportion of each split screen region to the entire screen, etc. Wherein, the direction for screen splitting may include four directions: top, bottom, left, and right; and proportions of respective split screen regions to the entire screen may be the same or different. In this embodiment, the screen splitting mode will not be limited. Exemplarily, FIG. 2a to FIG. 2c are exemplary diagrams of the split screen according to this embodiment; as shown in FIG. 2a, the screen is split into four split screens: a top left split screen, a bottom left split screen, a top right split screen and a bottom right split screen, and proportions of the four split screens to the entire screen are the same; as shown in FIG. 2b, the screen is split into three split screens: a top split screen, a middle split screen and a bottom split screen, and proportions of the three split screens to the entire screen are the same; as shown in FIG. 2c, the screen is split into three split screens: a left split screen, a middle split screen and a right split screen, and proportions of the three split screens to the entire screen are the same.

In this embodiment, the plurality of split screens may display images having different contents, or images having a same content but different styles, or images having a same content but processed with different effects.

In this embodiment, the number of required images is the same as the number of split screens. A source image may be processed in different stylizes based on the number of split screens, or processed with different effects, to obtain images corresponding to the number of split screens. Optionally, the images displayed in the split screen may all be images obtained by processing the source image, or, one of the split screens may display the source image, while the other split screens may display images obtained by processing the source image. A content displayed in each split screen will not be limited. Wherein, the source image may be an image collected in real time, an image stored locally, or an image downloaded from the server.

In this embodiment, after obtaining images corresponding to the number of split screens, one-to-one correspondences are established between the images and the split screens, so as to obtain images respectively corresponding to the plurality of split screens.

Wherein, the respectively rendering the plurality of images to corresponding split screens may be understood as: displaying the plurality of images respectively in the corresponding split screens. In this embodiment, the respectively rendering the plurality of images to corresponding split screens may be understood as: determining correspondences between image pixel points of the plurality of images and a plurality of screen pixel points in the screen (referred to as a canvas in a bottom layer), determining colors of the plurality of screen pixel points in the screen based on the correspondences, and rendering the plurality of screen pixel points based on the colors, so that the plurality of images are respectively displayed in the corresponding split screens.

In one embodiment, a mode of respectively rendering the plurality of images to corresponding split screens may be: determining a split screen to which a screen pixel point belongs for the screen pixel point in the screen, determining an image pixel point in an image corresponding to the screen pixel point in the split screen, and determining a color of the corresponding image pixel point as a color of the screen pixel point, so as to render the screen pixel point based on the color. The above-described operation is executed for each screen pixel point, so that a color of each screen pixel point may be obtained.

In one embodiment, a mode of respectively rendering the plurality of images to corresponding split screens may be: acquiring first sampled colors of the screen pixel point respectively in the plurality of images for the screen pixel point in the screen; linearly superposing the plurality of first sampled colors, to obtain a first target color of the screen pixel point; and rendering a plurality of pixel points in the screen based on the first target color, to respectively display the plurality of images in the corresponding split screens.

Wherein, the first sampled color may be understood as a color of the image pixel point in the image corresponding to the screen pixel point in the screen. That is, correspondences respectively between the screen pixel points in the screen and the image pixel points in the image need to be determined; and the first sampled colors of the screen pixel points in the screen are determined based on the correspondences. Wherein, the correspondence is determined by position information of the split screen in the screen and a proportion of the split screen to the screen.

In this embodiment, the mode of acquiring first sampled colors of the screen pixel point respectively in the plurality of images may be: acquiring the position information of the split screen in the screen and the proportion of the split screen to the screen, for the current split screen; performing linear transformation on coordinates of the screen pixel point based on the position information and the proportion, to obtain a first sampled coordinate of the screen pixel point in the image corresponding to the split screen; and determining the color of the image pixel point on the first sampled coordinate in the image corresponding to the split screen as the first sampled color.

Wherein, taking that the screen are equally split into four split screens: a top left (tl) split screen, a bottom left (bl) split screen, a top right (tr) split screen and a bottom right (br) split screen as an example, for the coordinates (uv.x, uv.y) of the screen pixel point in the screen, linear transformation are performed on the coordinates respectively according to the position information of the four split screens and proportions thereof to the screen, to obtain image pixel point coordinates of the screen pixel point in the images corresponding to the four split screens. The image coordinates in the image corresponding to the screen pixel point in the top left split screen are represented as: suv-tl=(clamp(uv.x*2.0, 0.0, 1.0), clamp((uv.y-5)*2), 0.0, 1.0)), where, clamp() function represents limiting a value between 0.0 and 1.0. The image coordinates in the image corresponding to the screen pixel point in the top right split screen are represented as: suv-tr=(clamp((uv.x-0.5)*2.0, 0.0, 1.0), clamp((uv.y-5)*2), 0.0, 1.0)). The image coordinates in the image corresponding to the screen pixel point in the bottom left split screen are represented as: suv-bl=(clamp(uv.x*2.0, 0.0, 1.0), clamp(uv.y*2), 0.0, 1.0)). The image coordinates in the image corresponding to the screen pixel point in the bottom right split screen are represented as: suv-br=(clamp((uv.x-0.5)*2.0, 0.0, 1.0), clamp(uv.y*2), 0.0, 1.0)). The above-described four-screen splitting mode is just an example according to this embodiment. In this embodiment, different screen splitting modes result in different correspondences between screen pixel point coordinates in the screen and image pixel point coordinates in the image corresponding to the split screen, which may be determined according to actual screen splitting situations, and will not be limited here. In this embodiment, linear transformation is performed on the coordinates of the screen pixel point based on the position information of the split screen in the screen and the proportion of the split screen to the screen, to accurately find corresponding first sampled coordinates thereof in the image corresponding to the split screen.

In this embodiment, after determining a first sampled coordinate of the screen pixel point in an image corresponding to each split screen, the color of the image pixel point on the first sampled coordinate in the image corresponding to the split screen is determined as the first sampled color, so as to obtain a plurality of first sampled colors corresponding to the screen pixel point.

In this embodiment, after obtaining the plurality of first sampled colors corresponding to the screen pixel point, a final color of the pixel point needs to be determined according to the split screen to which the screen pixel point belongs. Optionally, a mode of linearly superposing a plurality of first sampled colors, to obtain a first target color of the screen pixel point may be: determining a first superposition coefficient of each first sampled color according to a positional relationship between the screen pixel point and each split screen; and linearly superposing the plurality of first sampled colors based on a first superposition coefficient of each first sampled color, to obtain the first target color of the screen pixel point.

Wherein, the positional relationship between the screen pixel point and the plurality of split screens may include the screen pixel point being within a split screen, or the screen pixel point being not within a split screen. The positional relationship may be determined according to coordinates of a pixel point and the position information of the split screen. If the screen pixel point is within the split screen, then the first superposition coefficient between the screen pixel point and the first sampled color of the image corresponding to the split screen is 1; if the screen pixel point is not within the split screen, then the first superposition coefficient between the screen pixel point and the first sampled color in the image corresponding to the split screen is 0. Taking the four-split screen according to the above-described embodiment as an example, the first superposition coefficient between the screen pixel point (uv.x, uv.y) and the first sampled color in the image corresponding to the top left split screen may be represented as: A=(1-step(0.5, uv.x))*(1.0-step(0.5, uv.y)); the first superposition coefficient between the screen pixel point (uv.x, uv.y) and the first sampled color in the image corresponding to the top right split screen may be represented as: B=(step(0.5, uv.x))*(1.0-step(0.5, uv.y)); the first superposition coefficient between the screen pixel point (uv.x, uv.y) and the first sampled color in the image corresponding to the bottom left split screen may be represented as: C=(1-step(0.5, uv.x))*(step(0.5, uv.y)); and the first superposition coefficient between the screen pixel point (uv.x, uv.y) and the first sampled color in the image corresponding to the bottom right split screen may be represented as: D=(step(0.5, uv.x))*(step(0.5, uv.y)). Where, the step(a, b) function represents that: if a>b, return 0; if a≤b, return 1. Linear superposition of the plurality of first sampled colors based on the first superposition coefficient may be represented as: first target color=A*tl-color+B* tr-color+C* bl-color+D* br-color. Where, tl-color is the first sampled color corresponding to the top left split screen image; tr-color is the first sampled color corresponding to the top right split screen image; bl-color is the first sampled color corresponding to the bottom left split screen image; and br-color is the first sampled color corresponding to the bottom right split screen image. In this embodiment, the step() function is used for determining a first superposition coefficient of a plurality of first sampled colors, without using the if-else function, which greatly saves computing resources of the graphics processing unit (GPU). Moreover, by using the step function, it is more favorable for parallel computation of each pixel point in the screen, which may improve computational efficiency.

In this embodiment, for each screen pixel point in the screen, the first target color of the screen pixel point is determined in the above-described mode, and the plurality of pixel points in the screen are rendered based on the first target color, so as to respectively display the plurality of images in the corresponding split screens, which may improve rendering efficiency.

S120: determining a target split screen from the plurality of split screens.

Wherein, the target split screen may be determined from all split screens, or determined from some split screens. For example, assuming that one of the split screens displays the source image, and the other split screens display images obtained by stylizing the source image, then the target split screen is determined from the split screens that display the stylized images, that is, the split screen that displays the source image is no longer in a list for selection.

Optionally, a mode of determining a target split screen from the plurality of split screens may be: randomly selecting one split screen from the plurality of split screens and determining the same as the target split screen; or, setting a Round Robin duration for the plurality of split screens, and determining a split screen obtained at the end of Round Robin as the target split screen.

Wherein, the process of randomly selecting one split screen from the plurality of split screens and determining the same as the target split screen may be: numbering the plurality of split screens, and calculating the numbers by using a random function to obtain a random result, the random result being just the number of the selected split screen.

Wherein, the set duration may be arbitrarily set by the user. The mode of Round Robin may be constant-speed Round Robin or variable-speed Round Robin, for example: firstly fast then slow, or firstly slow then fast, or firstly slow then fast then slow again, which will not be limited here.

Optionally, a mode of setting a Round Robin duration for the plurality of split screen may be: acquiring a Round Robin progress from the start of Round Robin to the current moment; determining an initial Round Robin interval according to the Round Robin progress and a first set function; mapping the initial Round Robin interval to a set interval, to obtain a target Round Robin interval; and performing Round Robin from the current split screen to a next split screen, when the target Round Robin interval passes from the current moment.

Wherein, the Round Robin progress is a proportion of the duration having undergone Round Robin to a set duration, and the duration having undergone Round Robin may be understood as a duration from the start of Round Robin to the current moment. The first set function may be an easing function, or a modified function of the easing function. Wherein, the easing function includes modes below. Ease-in: the speed is very slow at the beginning, then gradually increases, and suddenly stops at the end; ease-out: the speed is very fast at the beginning and then gradually slows down; and ease-in-out: the speed is slow at the beginning and at the end, and fast in the middle. In this embodiment, in order to implement different modes of Round Robin, corresponding easing functions may be adopted, which will not be limited here.

Wherein, the set interval may be a range of the Round Robin interval set by a user, for example: [0.05, 0.1]. Exemplarily, the Round Robin progress is substituted into the first set function, to obtain the initial Round Robin interval; and the initial Round Robin interval is mapped to the set interval, to obtain the target Round Robin interval. In this embodiment, a Round Robin interval at each moment is determined based on the first set function, which may improve randomness of determining the target split screen.

Exemplarily, assuming that the mode of Round Robin is firstly slow then fast then slow again, FIG. 3 is an exemplary diagram of the first set function selected according to this embodiment. As shown in FIG. 3, the first set function is a modification to the easing function; when x>0.5, it is modified to y=1.0-y0, where, y0 is a y value of the original easing function. An x value on an abscissa axis represents the Round Robin progress; the x value is substituted into the function, yielding a y value fluctuating between [0, 0.5]. The y value is mapped to [0, 1] by using a formula 1.0-2y, and then the mapped value is again mapped to the set interval, to obtain the target Round Robin interval corresponding to the current moment; Round Robin is performed from the current split screen to a next split screen, when the target Round Robin interval passes from the current moment, so as to achieve the effect of firstly slow then fast then slow again in the entire Round Robin process.

S130: determining display information of the screen pixel point in a target split screen zoom-in process.

S140: zooming in and rendering an image in the target split screen, based on the display information.

Wherein, the display information may include color information and transparency information. The display information may be represented by four channel values as: RGBA, where, RGB represents the color information and A represents the transparency information. The display information of the screen pixel point in the target split screen zoom-in process may be understood as: display information of the screen pixel point in each frame of the target split screen from the beginning to the end of the zoom-in process. In this embodiment, for each frame, the display information of the screen pixel point needs to be re-determined, to render the frame according to the display information.

In this embodiment, the process of zooming in and rendering the image in the target split screen, based on the display information may be understood as: determining display information of a plurality of screen pixel points in each frame of the target split screen in the zoom-in process, and rendering the plurality of screen pixel points based on the display information, to display each frame of picture in the zoom-in process.

Optionally, a mode of determining display information of the screen pixel point in the target split screen zoom-in process may be: acquiring a zoom-in proportion corresponding to the current moment; and determining a second target color of the screen pixel point based on the zoom-in proportion, for the pixel point in the screen. Correspondingly, a mode of zooming in and rendering the image in the target split screen, based on the display information may be: rendering a plurality of pixel points in the screen based on the second target color, to zoom in the image in the target split screen.

Wherein, the zoom-in proportion may be understood as a proportion of an area of a region occupied by the target split screen zoomed in at the current moment to an area of a region occupied by the target split screen before being zoomed in; or, a proportion of a distance from a target corner point to a diagonal corner point of the target corner point to a distance from a corner point of the target split screen before being zoomed in to a diagonal corner point of the corner point of the target split screen. The target corner point may be understood as the corner point of the target split screen zoomed in at the current moment; for example, if the target split screen is zoomed in to a full screen, then the target corner point is the corner point of the full screen.

In this embodiment, the zoom-in proportion may be changed at a constant speed or at a variable speed (e.g., firstly slow then fast, firstly fast then slow, etc.). A mode of acquiring a zoom-in proportion corresponding to the current moment may be: acquiring a zoom-in progress corresponding to the current moment; and determining the zoom-in proportion based on the zoom-in progress and a second set function.

Wherein, the zoom-in progress is a proportion of a duration from starting zooming in to the current moment to the total zoom-in duration. The second set function may be an easing function, or a modified function of the easing function. Different second set functions selected result in different modes of zooming in target split screen at variable speeds. Exemplarily, the zoom-in progress is substituted into the second set function, and the obtained value is taken as the zoom-in proportion. In this embodiment, the second set function is used for determining the zoom-in proportion, so that a zoom-in proportion determined at each moment in the zoom-in progress is different, so that the target split screen presents an effect of zooming in at variable speeds.

Wherein, the determining the second target color of the pixel points based on the zoom-in proportion may be understood as: determining a correspondence between a pixel point in the screen and a pixel point in the image corresponding to the target split screen based on the zoom-in proportion, and determining the second target color based on the correspondence.

Optionally, a mode of determining a second target color of the screen pixel point based on the zoom-in proportion, may be: determining a second sampled color of the screen pixel point in the image corresponding to the target split screen based on the zoom-in proportion; and determining the second target color according to the second sampled color and the initial color of the screen pixel point; wherein, the initial color is a display color of the screen pixel point before zooming in the target split screen.

Wherein, the second sampled coordinate of the screen pixel point in the image corresponding to the target split screen is determined based on the zoom-in proportion, and the color of the image pixel point on the second sampled coordinate is determined as the second sampled color of the screen pixel point. Taking the four-split screen according to the above-described embodiment as an example, the zoom-in proportion is represented as r; for the coordinates (uv.x, uv.y) of the screen pixel point in the target split screen in the screen, assuming that the target split screen is the top left split screen, the second sampled coordinates corresponding to the screen pixel point are: suv-a-tl=(clamp(uv.x/(0.5+0.5*r), 0.0, 1.0), 1.0-clamp((1.0-uv.y)/(0.5+0.5*r). Assuming that the target split screen is the top right split screen, the second sampled coordinates corresponding to the screen pixel point are: suv-a-tr=(clamp(1.0-(1.0-uv.x)/(0.5+0.5*r), 0.0, 1.0), 1.0-clamp((1.0-uv.y)/(0.5+0.5*r), 0.0, 1.0)). Assuming that the target split screen is the bottom left split screen, the second sampled coordinates corresponding to the screen pixel point are: suv-a-bl=(clamp(uv.x/(0.5+0.5*r), 0.0, 1.0), clamp(uv.y/(0.5+0.5*r), 0.0, 1.0)). Assuming that the target split screen is the bottom right split screen, the second sampled coordinates corresponding to the screen pixel point are: suv-a-br=(clamp(1.0-(1.0-uv.x)/(0.5+0.5*r), 0.0, 1.0), clamp(uv.y/(0.5+0.5*r), 0.0, 1.0)).

In this embodiment, after acquiring the second sampled coordinates in the image corresponding to the screen pixel point in the target split screen, the pixel point color on the second sampled coordinates is determined as the second sampled color. If rendering is performed based on the second sampled color, the rendered effect is displaying the corresponding image in a region corresponding to the target split screen, while displaying in monochrome in other regions. Therefore, in order to avoid displaying in monochrome in other regions, it is necessary to judge according to the position of the screen pixel point. If the screen pixel point is located in the target split screen, then the second sampled color is displayed; and if the screen pixel point is located outside the target split screen, the initial color is displayed.

In this embodiment, the second target color is determined according to the second sampled color and the initial color of the screen pixel point, which may improve a display effect.

Wherein, the initial color is the display color of the screen pixel point before being zoomed in. Exemplarily, the superposition coefficient of the second sampled color and the initial color needs to be determined according to the position information of the screen pixel point; and the second sampled color and the initial color of the screen pixel point are superimposed based on the superposition coefficient, to obtain the second target color. Taking the four-split screen in the above-described embodiment as an example, assuming that the source color is represented as s-color and the target split screen is the top right split screen, the second target color is represented as: tr-amp-color=(1.0-step(0.5-0.5*r, uv.x))*(1.0-step(0.5+0.5*r, uv.y))*s-color+step(0.5-0.5*r, uv.x)*(1.0-step(0.5+0.5*r, uv.y))*tr-a-color+(1.0-step(0.5-0.5*r, uv.x))*step(0.5+0.5*r, uv.rev.y)*s-color+step(0.5-0.5*r, uv.x)*step(0.5+0.5*r, uv.y)*s-color; where, tr-a-color is the second sampled color corresponding to the top right split screen. Assuming that the target split screen is the bottom left split screen, the second target color is represented as: bl-amp-color=(1.0-step(0.5+0.5*r, uv.x))*(1.0-step(0.5-0.5*r, uv.y))*s-color+step(0.5+0.5*r, uv.x)*(1.0-step(0.5-0.5*r, uv.y))*s-color+(1.0-step(0.5+0.5*r, uv.x))*step(0.5-0.5*r, uv.y)*bl-a-color+step(0.5+0.5*r, uv.x)*step(0.5-0.5*r, uv.y)*s-color; where, bl-a-color represents the second sampled color corresponding to the bottom left split screen. Assuming that the target split screen is the bottom right split screen, the second target color is represented as: br-amp-color=(1.0-step(0.5-0.5*r, uv.x))*(1.0-step(0.5+0.5*r, uv.y))*s-color+ step(0.5-0.5*r, uv.x)*(1.0-step(0.5-0.5*r, uv.y))* s-color+(1.0-step(0.5-0.5*r, uv.x))*step(0.5-0.5*r, uv.rev.y)*s-color+step(0.5-0.5*r, uv.x)*step(0.5-0.5*r, uv.y)*bl-a-color; where, bl-a-color is the second sampled color corresponding to the bottom right split screen.

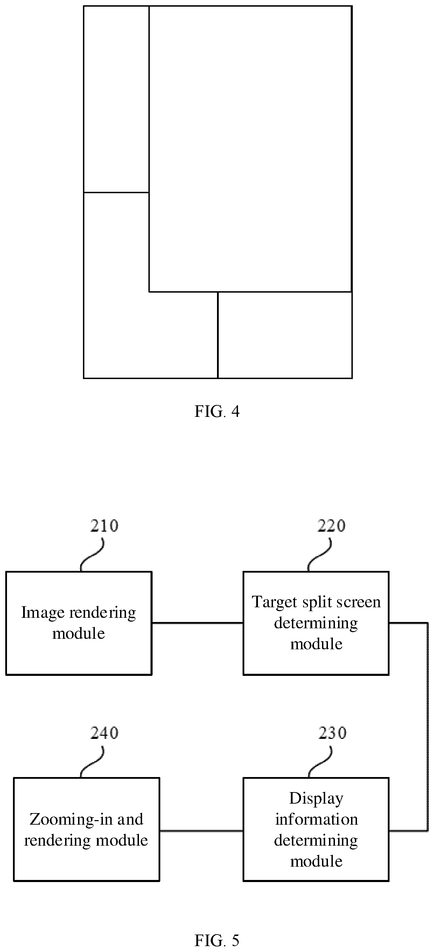

Exemplarily, in the zoom-in process, after obtaining the second target color of the plurality of screen pixel points at the current moment, rendering is performed based on the second target color, to display the image of the target split screen having been zoomed in. Exemplarily, FIG. 4 is an exemplary diagram of an zoomed-in split screen provided by this embodiment; and as shown in FIG. 4, it is the top right split screen that is zoomed in.

Optionally, a mode of determining the second target color of the pixel point based on the zoom-in proportion may be: determining a second superposition coefficient corresponding to a plurality of split screens according to the target split screen; determining third sampled colors of the screen pixel point respectively in the plurality of images based on the zoom-in proportion; determining a plurality of intermediate colors according to the plurality of third sampled colors and the initial color of the screen pixel point; and linearly superposing the plurality of intermediate colors based on the second superposition coefficient, to obtain the second target color of the screen pixel point.

Wherein, the second superposition coefficient is determined by whether the split screen is selected as the target split screen to be zoomed in; if the split screen is selected to be zoomed in, then the second superposition coefficient is 1; and if the split screen is not selected to be zoomed in, then the second superposition coefficient is 0.

Wherein, the process of determining the second sampled color according to the above-described embodiment may be referred to for the mode of determining the third sampled colors of the screen pixel point respectively in the plurality of images based on the zoom-in proportion; and no details will be repeated here. The above-described process of determining the second target color may be referred to for the process of determining the plurality of intermediate colors according to the plurality of third sampled colors and the initial color of the pixel point, and no details will be repeated here. The linearly superposing the plurality of intermediate colors based on the second superposition coefficient may be understood as: accumulating the second superposition coefficient as a coefficient corresponding to the intermediate color, to obtain the second target color. Exemplarily, assuming that u-tl is the second superposition coefficient corresponding to the top left split screen, u-tr is the second superposition coefficient corresponding to the top right split screen, u-bl is the second superposition coefficient corresponding to the bottom left split screen, and u-br is the second superposition coefficient corresponding to the bottom right split screen, the second target color is represented as: final-color=u-tl* tl-amp-color+u-tr* tr-amp-color+u-bl*bl-amp-color+u-br*br-amp-color. In this embodiment, the third sampled colors of the plurality of split screens are determined based on the zoom-in proportion, and then superposed based on the second superposition coefficient, which may avoid using the if-else function in the programming process, that is, avoiding judgment statements, which greatly saves GPU computing resources. Moreover, by using the step function, it is more favorable for parallel computation of each pixel point in the screen, which may improve computational efficiency.

Optionally, before the determining the second target color of the screen pixel point based on the zoom-in proportion, the method further includes steps of: determining an adjustment proportion at the current moment; and adjusting the initial color of the screen pixel point based on the adjustment proportion.

Where, the adjustment proportion is a value between 0 and 1, which may be set as a fixed value, or may also be determined according to the above-described zoom-in proportion; and the mode will not be limited here. The adjustment proportion is multiplied with the initial color, to obtain the adjusted initial color.

Correspondingly, the determining the second target color according to the third sampled color and the initial color of the screen pixel point may be: determining the second target color according to the third sampled color and the adjusted initial color of the screen pixel point. Correspondingly, a mode of determining a plurality of intermediate colors according to the plurality of third sampled colors and the initial color of the screen pixel point may be: determining the plurality of intermediate colors according to the plurality of third sampled colors and the adjusted initial color of the screen pixel point. In this embodiment, by adjusting the initial color, the display color outside the target split screen may be darker than the display color inside the target split screen, which improves a display effect.

The technical solution of the embodiment of the present disclosure involves: acquiring the images respectively corresponding to the plurality of split screens, and respectively rendering the plurality of images to the corresponding split screens; determining the target split screen from the plurality of split screens; and zooming in and rendering the image in the target split screen, based on the display information. In the split screen rendering method provided by the embodiment of the present disclosure, the plurality of images are respectively rendered into the corresponding split screens, which may improve richness of image exhibition; and the image of the target split screen is zoomed in and rendered based on the determined display information of the screen pixel point, without additionally processing the target split screen that needs to be zoomed in, which may improve efficiency of zooming in and rendering the target split screen.

FIG. 5 is a structural schematic diagram of a split screen rendering apparatus provided by an embodiment of the present disclosure; and as shown in FIG. 5, the apparatus includes:
An image rendering module 210, configured to acquire images respectively corresponding to a plurality of split screens, and respectively render the plurality of images to corresponding split screens;
A target split screen determining module 220, configured to determine a target split screen from the plurality of split screens;
A display information determining module 230, configured to determine display information of a screen pixel point in the target split screen zoom-in process.

A zooming-in and rendering module 240, configured to zoom in and render an image in the target split screen, based on the display information.

Optionally, the image rendering module 210 is further configured to:
Acquire first sampled colors of the screen pixel point respectively in the plurality of images for the screen pixel point in the screen;
Linearly superpose the plurality of first sampled colors, to obtain a first target color of the screen pixel point; and
Render a plurality of pixel points in the screen based on the first target color, to respectively display the plurality of images in the corresponding split screens.

Optionally, the image rendering module 210 is further configured to:
Acquire position information of the split screen in the screen and a proportion of the split screen to the screen, for the current split screen;
Perform linear transformation on coordinates of the screen pixel point based on the position information and the proportion, to obtain a first sampled coordinate of the screen pixel point in an image corresponding to the split screen; and
Determine the color of the image pixel point on the first sampled coordinate in the image corresponding to the split screen as the first sampled color.

Optionally, the image rendering module 210 is further configured to:
Determine a first superposition coefficient of each first sampled color according to a positional relationship between the screen pixel point and each split screen; and
Linearly superpose the plurality of first sampled colors based on the first superposition coefficient, to obtain the first target color of the screen pixel point.

Optionally, the target split screen determining module 220 is further configured to:
Randomly select one split screen from the plurality of split screens and determine the same as the target split screen; or, set a Round Robin duration for the plurality of split screens, and determine a split screen obtained at the end of Round Robin as the target split screen.

Optionally, the target split screen determining module 220 is further configured to:
Acquire a Round Robin progress from the start of Round Robin to the current moment, wherein, the Round Robin progress is a proportion of the duration having undergone Round Robin to a set duration;
Determine an initial Round Robin interval according to the Round Robin progress and a first set function;
Map the initial Round Robin interval to a set interval, to obtain a target Round Robin interval; and
Perform Round Robin from the current split screen to a next split screen, when the target Round Robin interval passes from the current moment.

Optionally, the display information determining module 230 is further configured to:
Acquire a zoom-in proportion corresponding to the current moment; and
Determine a second target color of the screen pixel point based on the zoom-in proportion, for the pixel point in the screen;
Optionally, the zooming-in and rendering module 240 is further configured to:
   Render a plurality of pixel points in the screen based on the second target color, to zoom in the image in the target split screen.

Optionally, the display information determining module 230 is further configured to:
Determine a second sampled color of the screen pixel point in the image corresponding to the target split screen based on the zoom-in proportion; and
Determine the second target color according to the second sampled color and the initial color of the screen pixel point; wherein, the initial color is a display color of the screen pixel point before zooming in the target split screen.

Optionally, the display information determining module 230 is further configured to:
Determine a second superposition coefficient corresponding to a plurality of split screens according to the target split screen;
Determine third sampled colors of the screen pixel point respectively in the plurality of images based on the zoom-in proportion;
Determine a plurality of intermediate colors according to the plurality of third sampled colors and the initial color of the screen pixel point; and
Linearly superpose the plurality of intermediate colors based on the second superposition coefficient, to obtain the second target color of the screen pixel point.

Optionally, the apparatus further includes: an initial color adjusting module, configured to:
Determine an adjustment proportion at the current moment; and
Adjust the initial color of the screen pixel point based on the adjustment proportion.

Optionally, the display information determining module 230 is further configured to:
acquire a zoom-in progress corresponding to the current moment; wherein, the zoom-in progress is a proportion of a duration from starting zooming in to the current moment to the total zoom-in duration; and
Determine the zoom-in proportion based on the zoom-in progress and a second set function.

The split screen rendering apparatus provided by the embodiment of the present disclosure may execute the split screen rendering method provided by any embodiment of the present disclosure, and has corresponding functional modules and effects for executing the method.

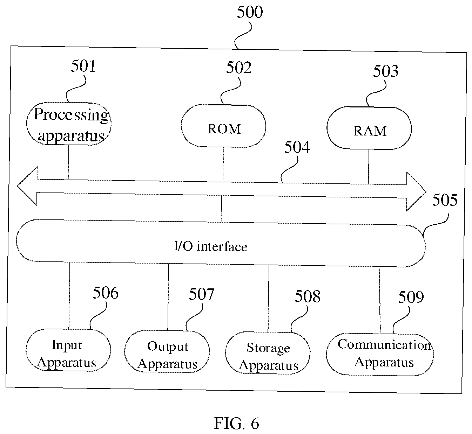

FIG. 6 is a structural schematic diagram of an electronic device provided by an embodiment of the present disclosure. FIG. 6 is specifically referred below, and it shows the structure schematic diagram suitable for achieving the electronic device 500 (for example, a terminal device or server as shown in FIG. 6) in the embodiment of the present disclosure. The electronic device 600 in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in FIG. 6 is only an example and should not impose any limitations on the functions and use scopes of the embodiments of the present disclosure.

As shown in FIG. 6, the electronic device 500 may include a processing apparatus (such as a central processing unit, and a graphics processor) 501, it may execute various appropriate actions and processes according to a program stored in a read-only memory (ROM) 502 or a program loaded from a storage apparatus 508 to a random access memory (RAM) 503. In RAM 503, various programs and data required for operations of the electronic device 500 are also stored. The processing apparatus 501, ROM 502, and RAM 503 are connected to each other by a bus 504. An input/output (I/O) interface 505 is also connected to the bus 504.

Typically, the following apparatuses may be connected to the I/O interface 505: an input apparatus 506 such as a touch screen, a touchpad, a keyboard, a mouse, a camera, a microphone, an accelerometer, and a gyroscope; an output apparatus 507 such as a liquid crystal display (LCD), a loudspeaker, and a vibrator; a storage apparatus 508 such as a magnetic tape, and a hard disk drive; and a communication apparatus 509. The communication apparatus 509 may allow the electronic device 500 to wireless-communicate or wire-communicate with other devices so as to exchange data. Although FIG. 6 shows the electronic device 500 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 509, or installed from the storage apparatus 508, or installed from ROM 502. When the computer program is executed by the processing apparatus 501, the above functions defined in the embodiments of the present disclosure are executed.

The electronic device provided by the embodiment of the present disclosure belongs to a same inventive concept as the split screen rendering method provided by the above-described embodiments. The above-described embodiments may be referred to for technical details not described in detail in this embodiment; and this embodiment has the same effects as the above-described embodiments.

An embodiment of the present disclosure provides a computer readable storage medium, having a computer program stored thereon; wherein, the program, when executed by a processor, implements the split screen rendering method provided by the above-described embodiment.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-described computer readable storage medium may be included in the above-described electronic device; or may also exist alone without being assembled into the electronic device.

The above-described computer readable medium carries at least one programs, and when the at least one programs are executed by the electronic device, the electronic device is caused to: acquire images respectively corresponding to a plurality of split screens, and respectively render the plurality of images to corresponding split screens; determine a target split screen from the plurality of split screens; determine display information of a screen pixel point in the target split screen zoom-in process; and zoom in and render the image in the target split screen, based on the display information.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

According to at least one embodiment according to the present disclosure, a split screen rendering method is provided, which includes:
Acquiring images respectively corresponding to a plurality of split screens, and respectively rendering the plurality of images to corresponding split screens;
Determining a target split screen from the plurality of split screens;
Determining display information of a screen pixel point in the target split screen zoom-in process; and
Zooming in and rendering the image in the target split screen, based on the display information.

Exemplarily, the respectively rendering the plurality of images to corresponding split screens, includes:
Acquiring first sampled colors of the screen pixel point respectively in the plurality of images for the screen pixel point in the screen;
Linearly superposing the plurality of first sampled colors, to obtain a first target color of the screen pixel point; and
Rendering a plurality of pixel points in the screen based on the first target color, to respectively display the plurality of images in the corresponding split screens.

Exemplarily, the acquiring first sampled colors of the screen pixel point respectively in the plurality of images, includes:
Acquiring position information of the split screen in the screen and a proportion of the split screen to the screen, for the current split screen;
Performing linear transformation on coordinates of the screen pixel point based on the position information and the proportion, to obtain a first sampled coordinate of the screen pixel point in the image corresponding to the split screen; and
Determining the color of the image pixel point on the first sampled coordinate in the image corresponding to the split screen as the first sampled color.

Exemplarily, the linearly superposing the plurality of first sampled colors, to obtain a first target color of the screen pixel point, includes:
Determining a first superposition coefficient of each first sampled color according to a positional relationship between the screen pixel point and each split screen; and
Linearly superposing the plurality of first sampled colors based on the first superposition coefficient, to obtain the first target color of the screen pixel point.

Exemplarily, the determining a target split screen from the plurality of split screens, includes:
Randomly selecting one split screen from the plurality of split screens and determining the same as the target split screen; or, setting a Round Robin duration for the plurality of split screens, and determining a split screen obtained at the end of Round Robin as the target split screen.

Exemplarily, the setting a Round Robin duration for the plurality of split screens, includes:
Acquiring a Round Robin progress from the start of Round Robin to the current moment; wherein, the Round Robin progress is a proportion of the duration having undergone Round Robin to a set duration;
Determining an initial Round Robin interval according to the Round Robin progress and a first set function;
Mapping the initial Round Robin interval to a set interval, to obtain a target Round Robin interval; and
Performing Round Robin from the current split screen to a next split screen, when the target Round Robin interval passes from the current moment.

Exemplarily, the display information includes a color; and the determining display information of a screen pixel point in the target split screen zoom-in process, includes:
Acquiring a zoom-in proportion corresponding to the current moment; and
Determining a second target color of the screen pixel point based on the zoom-in proportion, for the pixel point in the screen;
The zooming in and rendering the image in the target split screen, based on the display information, includes:
   Rendering a plurality of pixel points in the screen based on the second target color, to zoom in the image in the target split screen.

Exemplarily, the determining a second target color of the screen pixel point based on the zoom-in proportion, includes:
Determining a second sampled color of the screen pixel point in the image corresponding to the target split screen based on the zoom-in proportion; and
Determining the second target color according to the second sampled color and the initial color of the screen pixel point; wherein, the initial color is a display color of the screen pixel point before zooming in the target split screen.

Exemplarily, the determining a second target color of the screen pixel point based on the zoom-in proportion, includes:
Determining a second superposition coefficient corresponding to a plurality of split screens according to the target split screen;
Determining third sampled colors of the screen pixel point respectively in the plurality of images based on the zoom-in proportion;
Determining a plurality of intermediate colors according to the plurality of third sampled colors and the initial color of the screen pixel point; and
Linearly superposing the plurality of intermediate colors based on the second superposition coefficient, to obtain the second target color of the screen pixel point.

Exemplarily, before the determining a second target color of the screen pixel point based on the zoom-in proportion, the method further includes:
Determining an adjustment proportion at the current moment; and
Adjusting the initial color of the screen pixel point based on the adjustment proportion.

Exemplarily, the acquiring a zoom-in proportion corresponding to the current moment, includes:
Acquiring a zoom-in progress corresponding to the current moment; wherein, the zoom-in progress is a proportion of a duration from starting zooming in to the current moment to the total zoom-in duration; and
Determining the zoom-in proportion based on the zoom-in progress and a second set function.

## Claims

1. A split screen rendering method, comprising:
acquiring a plurality of images respectively corresponding to a plurality of split screens, and respectively rendering the plurality of images to the plurality of corresponding split screens;
determining a target split screen from the plurality of split screens;
determining display information of a screen pixel point in a target split screen zoom-in process; and
zooming in and rendering the image in the target split screen, based on the display information.

2. The method according to claim 1, wherein, the respectively rendering the plurality of images to the plurality of corresponding split screens, comprises:
acquiring a plurality of first sampled colors of the screen pixel point respectively in the plurality of images, for the screen pixel point in the screen;
linearly superposing the plurality of first sampled colors, to obtain a first target color of the screen pixel point; and
rendering a plurality of pixel points in the screen based on the first target color, to respectively display the plurality of images in the corresponding split screens.

3. The method according to claim 2, wherein, the acquiring first sampled colors of the screen pixel point respectively in the plurality of images, comprises:
acquiring position information of the split screen in the screen and a proportion of the split screen to the screen, for a current split screen;
performing linear transformation on coordinates of the screen pixel point based on the position information and the proportion, to obtain a first sampled coordinate of the screen pixel point in the image corresponding to the split screen; and
determining the color of the image pixel point on the first sampled coordinate in the image corresponding to the split screen as the first sampled color.

4. The method according to claim 2, wherein, the linearly superposing the plurality of first sampled colors, to obtain a first target color of the screen pixel point, comprises:
determining a first superposition coefficient of each first sampled color according to a positional relationship between the screen pixel point and each split screen; and
linearly superposing the plurality of first sampled colors based on a first superposition coefficient of each first sampled color, to obtain the first target color of the screen pixel point.

5. The method according to claim 1, wherein, the determining a target split screen from the plurality of split screens, comprises:
randomly selecting one split screen from the plurality of split screens as the target split screen; or, setting a Round Robin duration for the plurality of split screens, and determining a split screen obtained at an end of Round Robin as the target split screen.

6. The method according to claim 5, wherein, the setting a Round Robin duration for the plurality of split screens, comprises:
acquiring a Round Robin progress from a start of Round Robin to a current moment; wherein the Round Robin progress is a proportion of a duration having undergone Round Robin to the Round Robin duration which is set;
determining an initial Round Robin interval according to the Round Robin progress and a first set function;
mapping the initial Round Robin interval to a set interval, to obtain a target Round Robin interval; and
performing Round Robin from a current split screen to a next split screen, when the target Round Robin interval passes from the current moment.

7. The method according to claim 1, wherein, the display information comprises a color; and the determining display information of a screen pixel point in a target split screen zoom-in process, comprises:
acquiring a zoom-in proportion corresponding to a current moment; and
determining a second target color of the screen pixel point based on the zoom-in proportion, for the pixel point in the screen;
the zooming in and rendering the image in the target split screen, based on the display information, comprises:
rendering a plurality of pixel points in the screen based on the second target color, to zoom in the image in the target split screen.

8. The method according to claim 7, wherein, the determining a second target color of the screen pixel point based on the zoom-in proportion, comprises:
determining a second sampled color of the screen pixel point in the image corresponding to the target split screen based on the zoom-in proportion; and
determining the second target color according to the second sampled color and the initial color of the screen pixel point; wherein the initial color is a display color of the screen pixel point before zooming in the target split screen.

9. The method according to claim 7, wherein, the determining a second target color of the screen pixel point based on the zoom-in proportion, comprises:
determining a second superposition coefficient corresponding to a plurality of split screens according to the target split screen;
determining a plurality of third sampled colors of the screen pixel point respectively in the plurality of images based on the zoom-in proportion;
determining a plurality of intermediate colors according to the plurality of third sampled colors and the initial color of the screen pixel point; and
linearly superposing the plurality of intermediate colors based on the second superposition coefficient, to obtain the second target color of the screen pixel point.

10. The method according to claim 8 or 9, wherein, before the determining a second target color of the screen pixel point based on the zoom-in proportion, the method further comprises:
determining an adjustment proportion at the current moment; and
adjusting the initial color of the screen pixel point based on the adjustment proportion.

11. The method according to claim 7, wherein, the acquiring a zoom-in proportion corresponding to the current moment, comprises:
acquiring a zoom-in progress corresponding to the current moment, wherein the zoom-in progress is a proportion of a duration from starting zooming in to the current moment to a total zoom-in duration; and
determining the zoom-in proportion based on the zoom-in progress and a second set function.

12. A split screen rendering apparatus, comprising:
an image rendering module (210), configured to acquire a plurality of images respectively corresponding to a plurality of split screens, and respectively render the plurality of images to the plurality of corresponding split screens;
a target split screen determining module (220), configured to determine a target split screen from the plurality of split screens;
a display information determining module (230), configured to determine display information of a screen pixel point in a target split screen zoom-in process; and
a zooming-in and rendering module (240), configured to zoom in and render an image in the target split screen, based on the display information.

13. An electronic device, comprising:
at least one processor; and
a storage apparatus, configured to store at least one program,
wherein, the at least one program, when executed by the at least one processor, causes the at least one processor to implement the split screen rendering method according to any one of claims 1 to 11.

14. A readable storage medium, comprising a computer program, wherein, the computer program, when executed by a computer processor, is configured to execute the split screen rendering method according to any one of claims 1 to 11.
